# EUROPÄISCHE PATENTSCHRIFT

(11) **EP 1 010 588 B1**
(45) Veröffentlichungstag und Bekanntmachung des Hinweises auf die Patenterteilung: **04.10.2006**
(21) Anmeldenummer: 99123163.0
(22) Anmeldetag: 22.11.1999
(51) Int. Cl.: B60R 21/02

(54) **Sicherheitseinrichtung für ein Kraftfahrzeug**
Safety device for a motor vehicle
Dispositif de sécurité pour véhicule automobile

(30) Priorität: 18.12.1998 DE 19858636
(43) Veröffentlichungstag der Anmeldung: 21.06.2000
(73) Patentinhaber: Volkswagen Aktiengesellschaft, 38436 Wolfsburg (DE)
(72) Erfinder: Trockel, Rudolf, 58452 Witten (DE); Fechner, Holger, 38440 Wolfsburg (DE)
(74) Vertreter: Liebl, Thomas

(56) Entgegenhaltungen:
- DE-A- 19 541 607
- DE-C- 4 445 485
- US-A- 4 726 438
- PATENT ABSTRACTS OF JAPAN vol. 1996, no. 10, 31. Oktober 1996 (1996-10-31) & JP 08 164782 A (MAZDA MOTOR CORP), 25. Juni 1996 (1996-06-25)
- PATENT ABSTRACTS OF JAPAN vol. 1999, no. 02, 26. Februar 1999 (1999-02-26) & JP 10 305746 A (HONDA MOTOR CO LTD), 17. November 1998 (1998-11-17)

## Beschreibung

Die Erfindung betrifft eine Sicherheitseinrichtung für ein Kraftfahrzeug, mit einer beweglich in einem vorderen Fußraum des Kraftfahrzeugs montierbaren Fußablage, die bei einem Aufprall des Kraftfahrzeugs entgegen der Fahrtrichtung verlagert wird, um die in den Fußraum ragenden unteren Extremitäten eines Insassen des Kraftfahrzeugs aus einem Bereich einer unfallbedingten Verformung einer Begrenzungswand des Fußraums heraus nach hinten zu bewegen.

Aus der DE 44 45 485 C1 ist bereits eine Sicherheitseinrichtung zum Schutz der unteren Extremitäten von Fahrzeuginsassen der eingangs genannten Art bekannt, bei welcher ein Bodenbelag des vorderen Fußraums eines Kraftfahrzeugs bei einem Unfall von einer sensorgesteuerten Vorrichtung nach hinten auf die Fahrzeuginsassen zu bewegt wird. Die sensorgesteuerte Vorrichtung umfaßt eine geeignete pyrotechnische, mechanische, pneumatische oder hydraulische Einrichtung sowie Kraftübertragungsmittel, um den Bodenbelag bei einer Aktivierung der Vorrichtung schubladenartig entgegen der Fahrtrichtung nach hinten zu bewegen, so daß die Füße und Beine der Fahrzeuginsassen aus dem verformungsgefährdeten Bereich heraus verlagert werden. Bei der bekannten Sicherheitseinrichtung wird jedoch der verhältnismäßig große konstruktive Aufwand als nachteilig angesehen.

Entsprechendes gilt auch für eine weitere aus der DE 195 41 607 A1 bekannte Sicherheitseinrichtung der eingangs genannten Art, bei der ein wannenförmiger, der Form des Bodenblechs folgender Beinrückholer entgegen der Fahrtrichtung gegenüber der Karosserie verschiebbar ist und bei einem Aufprall durch ein mit einer Beschleunigungsmasse verbundenes umgelenktes Stahlseil, einen pyrotechnischen Treibsatz oder einen Luftsack nach hinten gezogen wird. Im Fall der Beschleunigungsmasse wirkt sich außerdem noch deren verhältnismäßig hohes Gewicht ungünstig auf den Kraftstoffverbrauch aus.

In der DE 35 31 805 A1 ist ferner ein im vorderen Fußraum eines Kraftfahrzeugs fest montierbarer Fußabstützkörper offenbart, dessen Eigensteifigkeit unter derjenigen des zugeordneten Bereichs der Fußraumbegrenzungswand liegt und der es ermöglichen soll, daß sich bei einem Unfall die Füße eines Fahrzeuginsassen in den nachgiebigen Fußabstützkörper eingraben, um infolge des längeren Beschleunigungswegs die Belastung der Füße zu verringern.

Weiter ist es aus der EP 0 830 989 des Anmelders bei einer Pedalanordnung für ein Kraftfahrzeug grundsätzlich zwar an sich bereits bekannt, eine unfallbedingte Verformung des Kraftfahrzeugs und eine dadurch verursachte Relativbewegung zwischen zwei Fahrzeugkomponenten auszunutzen, um Verletzungen der unteren Extremitäten eines Fahrzeuginsassen zu verhindern. Jedoch wird dort die Relativbewegung eines Motors oder Getriebes gegenüber dem Fahrzeugaufbau mittels eines Bowdenzugs auf eine Bremsdruckstange übertragen, um die Bremsdruckstange auszuknicken und dadurch ein Bremspedal nach vorne in Richtung einer Spritzwand zu verschwenken.

Aus der den nächstliegenden Stand der Technik bildenden JP 08164782 ist eine Sicherheitseinrichtung für ein Kraftfahrzeug mit einer in einem vorderen Fußraum des Kraftfahrzeuges montierten Fußablage bekannt, die bei einer Intrusion einer Begrenzungswand in den Fußraum durch eine von der intrudierenden Begrenzungswand auf die Fußablage ausgeübten Kraft nach hinten verlagert wird zur Verlagerung von auf der Fußablage ruhenden unteren Extremitäten eines Insassen des Kraftfahrzeuges aus dem Verformungsbereich der Begrenzungswand des Fußraums heraus nach hinten.

Konkret ist hierbei ein die Fußaufstandsfläche für einen Fuß des Fahrzeuginsassen ausbildender Teil der Fußablage quaderartig mit einem unter der Fußaufstandsfläche ausgebildeten Hohlraum ausgebildet, wobei dieser quaderartige Teilbereich im montierten Grundzustand einen Spaltabstand zu der darunter angeordneten Begrenzungswand aufweisen soll. Im dem Boden des Fahrgastraumes zugeordneten Teilbereich der Fußablage ist ein winkelartig vom Quaderteil wegragender Befestigungswinkel ausgebildet, der mittels einer Befestigungsschraube am Fahrzeugboden zur Fixierung der gesamten Fußablage festgelegt ist. Die Schraubenaufnahmeöffnung ist hier schlitzartig ausgebildet, so dass die Fußablage im Falle einer Intrusion der Begrenzungswand und einer damit einhergehenden Rückwärtsverlagerung der Fußablage in Richtung zum Fahrzeuginsassen hin außer Eingriff mit der winkelseitigen Befestigungsschraube kommen kann. Durch diese Maßnahme soll vermieden werden, dass der Winkel zwischen dem auf der Fußablage abgestellten Fuß des Fahrzeuginsassen und dessen Schienbein nicht oder nur unwesentlich verkleinert wird. Ein derartiger Aufbau ist jedoch insbesondere im Falle einer Intrusion einer Begrenzungswand durch die dort auftretenden Kräfte und insbesondere auch durch die unterschiedlichen Kraftrichtungen von seiner Verlagerungsrichtung her nur sehr schwer kontrollierbar, so dass ein derartiger Aufbau insgesamt nur wenig praktikabel ist. Durch den Spaltabstand zwischen der Begrenzungswand und dem Quaderteil der Fußablage besteht insbesondere bei stärkeren, auf die Fußablage ausgeübten Kräften die Gefahr einer Beschädigung der Anordnung, wenn z. B. der Spaltbereich durch entsprechend hohe Kräfte so überdrückt wird, dass der Quaderteil der Fußablage im Bereich der Begrenzungswand zur Anlage kommt. Damit kann auch eine erhebliche Beeinträchtigung der Funktionssicherheit dieser Anordnung einhergehen. In anderen alternativen Ausführungsformen dieser JP 08164782 ist jeweils vorgesehen, dass eine im wesentlichen ähnlich wie zuvor beschrieben aufgebaute Fußablage mit solchen Mitteln zusammenwirkt, die bei einer Intrusion der Begrenzungswand das Nachvornetreten, d. h. die nach vorne in Richtung Begrenzungswand gerichtete Verlagerung der Fußablage ermöglicht, um den Winkel zwischen dem Schienbein und dem Fuß des Fahrzeuginsassen möglichst beizubehalten bzw. nur unwesentlich zu verringern. Beispielsweise sind hierfür als Mittel, die diese in Richtung vom Fahrzeuginsassen weg nach vorne gerichtete Verlagerung ermöglichen, komplizierte Rampenanordnungen mit schwierig beherrschbaren Geometrien vorgesehen. Auch diese Ausführungsformen sind insgesamt gesehen für einen praktischen Serieneinsatz weniger gut geeignet.

Ausgehend hiervon liegt der Erfindung die Aufgabe zugrunde, eine Sicherheitseinrichtung der eingangs genannten Art zu schaffen, bei der mit geringem konstruktivem Aufwand die Gefahr von Verletzungen der unteren Extremitäten von Fahrzeuginsassen im vorderen Fußraum auf kontrollierte Art und Weise verringert werden kann.
(weiter oben als Nachteil noch ergänzen für den Stand der Technik:)

Diese Aufgabe wird gelöst mit den Merkmalen des Anspruchs 1. Vorteilhafte Ausgestaltungen der Erfindung sind Gegenstand der Unteransprüche.

Gemäß Anspruch 1 ist die Fußablage an der Begrenzungswand befestigt. Damit lässt sich einerseits auf einfache Weise eine Verschiebung der Fußablage während des normalen Betriebs des Fahrzeuges verhindern. Andererseits und besonders vorteilhaft wird hierdurch jedoch auch eine kontrollierte Verlagerung der Fußablage im Falle einer Intrusion der Begrenzungswand und damit auch eine kontrollierte Verlagerung der auf der Fußablage ruhenden unteren Extremitäten der Fahrzeuginsassen möglich, da die Fußablage dann zusammen mit der sich verformenden Begrenzungswand entgegen der Fahrtrichtung verlagert wird. Durch die Festlegung der Fußablage an der Begrenzungswand und vorzugsweise auch an der Spritzwand zwischen Motorraum und Fahrgastraum wird somit sichergestellt, dass die Fußablage auch bei sich verformender Begrenzungswand weiterhin an dieser angebunden bleiben kann und somit die Fußablage nicht vollständig freikommt und damit unkontrolliert im Fußraum verlagert wird. D. h., dass sich die Fußablage zwar zusammen mit der Begrenzungswand entgegen der Fahrtrichtung bewegen kann, nicht jedoch allein.

Eine bevorzugte Ausgestaltung der Erfindung sieht vor, daß die Fußablage eine größere Steifigkeit als die Begrenzungswand aufweist, so daß sie nicht ohne weiteres mitverformt werden kann, und so im Fußraum montierbar ist, daß sie zum einen bei einer Intrusion der Begrenzungswand von dieser ohne großen Kraftaufwand entgegen der Fahrtrichtung verschoben werden kann, zum anderen jedoch im normalen Betrieb des Kraftfahrzeugs ihre Lage im Fußraum beibehält.

Diese eingeschränkte Beweglichkeit wird gemäß einer ersten vorteilhaften Alternative dadurch erreicht, daß die Fußablage lose auf einem Boden des Fahrgastraums aufliegt, wobei die Oberseite des letzteren und die Unterseite der ersteren durch eine entsprechend gewählte Oberflächenrauhigkeit und/oder Materialpaarung hinsichtlich ihres gemeinsamen Reibungskoeffizienten so angepaßt sind, daß zum Verschieben der Fußablage nach hinten eine vorbestimmte Haftreibungskraft überwunden werden muß, die vorzugsweise etwas größer ist als die Kräfte, die durch Fußbewegungen der Fahrzeuginsassen bzw. durch die beim Beschleunigen des Fahrzeugs auftretenden Trägheitskräfte entgegen der Fahrtrichtung auf die Fußablage ausgeübt werden.

Gemäß einer weiteren bevorzugten Ausgestaltung der Erfindung läßt sich die Fußablage so im Fußraum anbringen, daß neben einer Verschiebung entgegen der Fahrtrichtung und parallel zu einer Fahrzeuglängs- oder X-Achse eines rechtwinkligen Koordinatensystems gleichzeitig leichte Dreh- oder Kippbewegungen um eine zur Fahrtrichtung senkrechte und zur Fahrbahnebene parallele Quer- oder Y-Achse sowie ggf. auch um eine zur X- und Y-Achse senkrechte Z-Achse möglich sind, um einen im normalen Betrieb vorhandenen Fußablagewinkel bei einem Aufprall zu bewahren bzw. in vorteilhafter Weise zu verändern. Als Fußablagewinkel wird hier der Winkel zwischen einer von der X- und Y-Achse aufgespannten und zur Fahrbahnebene parallelen Ebene einerseits und einer im Bereich der Spritzwand angeordneten, dem Fahrzeuginsassen zugewandten schrägen ebenen Oberfläche der Fußablage bezeichnen.

Bei einer lose auf einem Boden des Fahrgastraums aufliegenden und aus Stabilitätsgründen zweckmäßig in Form einer flachen Wanne ausgebildeten Fußablage werden die genannten Dreh- oder Kippbewegungen vorzugsweise durch zusammenwirkende Führungen an der Fußablage und am benachbarten Boden des Fahrgastraums bewirkt, die bei einer Verlagerung der Fußablage entgegen der Fahrtrichtung diese gleichzeitig um einige Grad um die Y-Achse und ggf. um die Z-Achse drehen oder kippen.

Bei einer an der Begrenzungswand befestigten Fußablage werden die genannten Dreh- oder Kippbewegungen vorzugsweise dadurch ermöglicht bzw. gesteuert, daß zum einen die Fußablage an einer einzigen Stelle durch ein Kugelgelenk kardanisch an der Spritzwand befestigt ist, so daß sie sich gegenüber dieser mit drei rotatorischen Freiheitsgraden bewegen kann, und zum anderen in Führungen am Fahrzeugboden verschiebbar ist, um die Dreh- der Kippbewegungen während ihrer Verlagerung entgegen der Fahrtrichtung zu steuern.

Eine weitere bevorzugte Ausgestaltung der Erfindung sieht vor, daß die Fußablage im Bereich der Spritzwand zwischen dem Fahrgastraum und dem Motorraum einen hochgezogenen vorderen Rand aufweist, der vorzugsweise an die Form der Spritzwand angepaßt ist und gegen diese anliegt, um eine Kraftübertragung von der Spritzwand auf die Fußablage zu erleichtern. Wahlweise kann jedoch zwischen der Spritzwand und der Fußablage noch ein Padding oder Polster angeordnet werden, das als Energieabsorptionselement dient und durch seine Verformung die übertragenen Kräfte dämpft. Dadurch kann eine ruckartige Beschleunigung der Fußablage entgegen der Fahrtrichtung gemildert werden, wenn bei einem Aufprall die Spritzwand oder die Radhauswand mit hoher Beschleunigung in den Fußraum eindringt, zum Beispiel infolge einer Rückwärtsverlagerung des Motor- und/oder Getriebeblocks oder infolge des Eindringens eines Hindernisses.

Im folgenden wird die Erfindung anhand zweier in der Zeichnung dargestellter Ausführungsbeispiels näher erläutert. Es zeigen
- Fig. 1:: eine Draufsicht von oben auf eine erfindungsgemäße Fußablage;
- Fig. 2:: eine Längsschnittansicht der Fußablage entlang der Linie 2-2 aus Fig. 1;
- Fig. 3:: eine Querschnittsansicht der Fußablage entlang der Linie 3-3 aus Fig. 1;
- Fig. 4:: eine teilweise geschnittene Seitenansicht der im vorderen Fußraum eines Kraftfahrzeugs angebrachten Fußablage vor einer Spritzwandintrusion;
- Fig. 5:: eine Querschnittsansicht entlang der Linie 5-5 aus Fig. 4;
- Fig. 6:: eine teilweise geschnittene Seitenansicht der im vorderen Fußraum eines Kraftfahrzeugs angebrachten Fußablage nach einer Spritzwandintrusion;
- Fig. 7:: eine teilweise geschnittene Seitenansicht einer anderen erfindungsgemäßen Fußablage vor und nach einer Spritzwandintrusion.

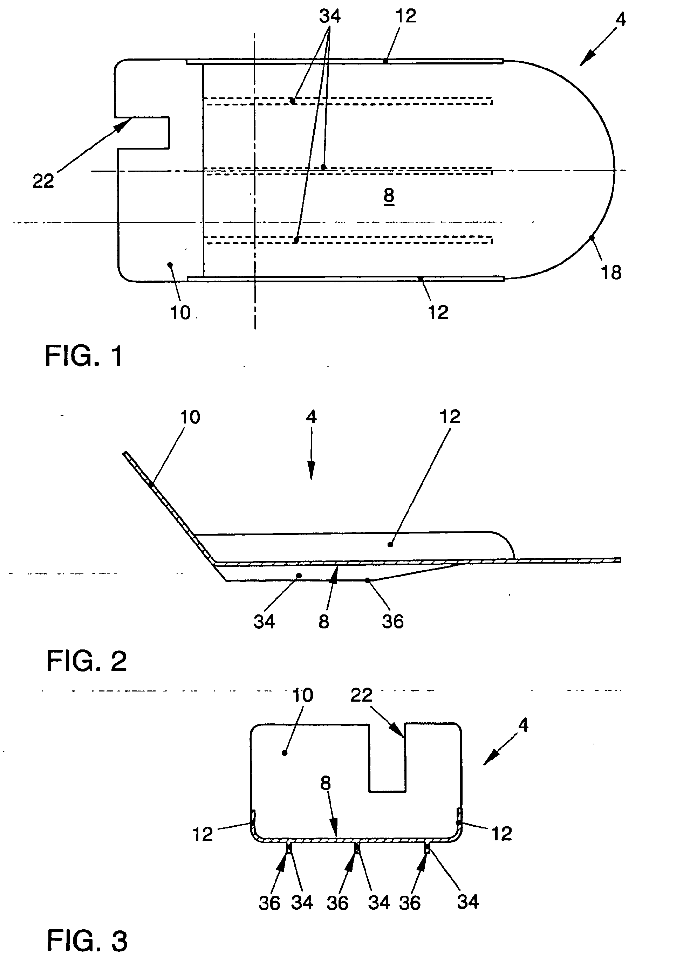

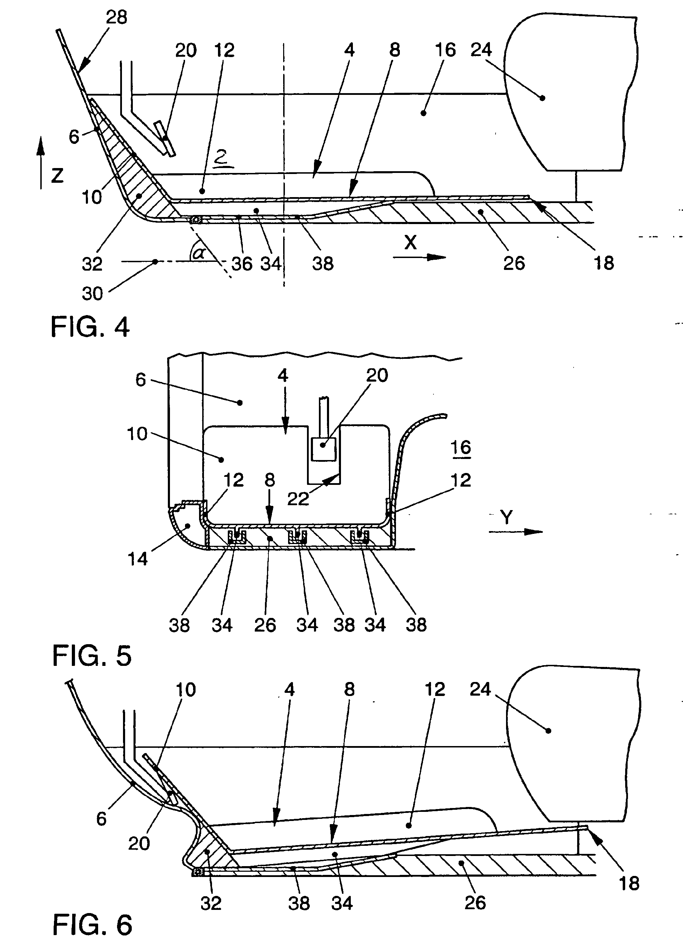

Die in den Figuren 1 bis 3 der Zeichnung dargestellte, im fahrerseitigen Fußraum 2 eines in den Figuren 4 bis 6 teilweise dargestellten Personenkraftwagens montierbare Fußablage 4 hat die Aufgabe, bei einem Aufprall des Personenkraftwagens die -in den Fußraum 2 ragenden unteren Extremitäten (nicht dargestellt) des Fahrers des Personenkraftwagens aus einem Bereich einer unfallbedingten Verformung einer den Fußraum 2 nach vorne zu begrenzenden Spritzwand 6 oder Radhauswand heraus nach hinten zu bewegen.

Die Fußablage 4 besteht im wesentlichen aus einem einstückigen, zum Beispiel durch Tiefziehen aus Metallblech oder durch Formen aus einem faserverstärkten Kunststoff hergestellten Formkörper, der in seiner Längsrichtung eine hohe Biegesteifigkeit und gleichzeitig ein verhältnismäßig geringes Gewicht und eine hohe Bruchfestigkeit aufweist. Die Biegesteifigkeit der Fußablage 2 ist so gewählt, daß sie diejenige der Spritzwand 6 bzw. der Radhauswand um ein Mehrfaches übersteigt.

Der Formkörper besitzt im wesentlichen die Gestalt einer flachen Wanne mit einem ebenen Boden 8, einem hochgezogenen vorderen Rand 10, der nach der Anbringung im Personenkraftwagen in Fahrtrichtung weist und zur Spritzwand 6 bzw. zur Radhauswand benachbart ist, zewi etwas nach oben überstehenden Längsseitenrändern 12, die gegen einen Türschweller 14 bzw. einen Mitteltunnel 16 des Personenkraftwagens anliegen (Fig. 5) und im Bereich ihrer Anlageflächen an die Form des Türschwellers 14 bzw. des Mitteltunnels 16 angepaßt sind, sowie einem flachen hinteren Ende mit einem in Draufsichthalbkreisförmig gerundeten Rand 18. Die Seitenränder 12 erstrecken sich bis zum hochgezogenen vorderen Rand 10, um die Biegesteifigkeit der Fußablage insbesondere am vorderen Ende des Bodens 8, d.h. im Auflagebereich der Hacken der Füße des Fahrers zu verstärken. Der Boden 8 der Fußablage 4 kann zur Reduzierung ihres Gewichts gelocht oder in anderer Weise durchbrochen ausgebildet sein.

Im Bereich eines Bremspedals 20 des Personenkraftwagens weist der hochgezogene vordere Rand 10 der Fußablage 4 eine Aussparung 22 auf, durch die sich im normalen Betrieb des Personenkraftwagens eine Pedaldruckstange (nicht dargestellt) des Bremspedals 20 erstreckt. Die Aussparung 22 ist so groß, daß sie bei einer Intrusion der Spritzwand 6 oder Radhauswand und einer dadurch hervorgerufenen Verschiebung der Fußablage 4 entgegen der Fahrtrichtung einen Hindurchtritt des Bremspedals 20 gestattet, so daß dieses die Verschiebung der Fußablage 4 nicht nach hinten behindert. Die Aussparung 22 ist jedoch zumindest quer zur Fahrtrichtung nicht sehr viel breiter als das Bremspedal 20, so daß ein bei einem Unfall vom Bremspedal 20 abrutschender Fuß des Fahrers vom vorderen Rand 10 der Fußablage 4 aufgefangen und mit nach hinten aus dem Bereich der Verformung der Spritzwand 6 heraus verlagert wird.

Wie am besten in Fig. 4 dargestellt, erstreckt sich die Fußablage 4 von der Spritzwand 6 aus entgegen der Fahrtrichtung nach hinten bis vor einen Fahrersitz 24, wobei sie lose auf dem Boden des Fußraums 2, genauer gesagt auf einer darauf angebrachten Dämmstoffschicht 26 aufliegt und von einem auf ihrer Oberseite angebrachten Fußbodenbelag (nicht dargestellt) verdeckt wird, so daß sie für die Fahrzeuginsassen nicht sichtbar ist.

Der hochgezogene vordere Rand 10 der Fußablage 4 liegt im Bereich seiner Oberkante unmittelbar gegen die Spritzwand 6 an und weist eine etwas größere Steigung als die benachbarte Spritzwand 6 auf, so daß ein in einer vertikalen Ebene entlang einer in Fahrtrichtung verlaufenden Fahrzeuglängs- oder X-Achse zwischen der schräg nach hinten und oben weisenden Oberfläche 28 des Randes 10 und einer zur Fahrbahnebene parallelen Ebene 30 gebildeter Fußablagewinkel α ≤ 57 Grad ist (Fig. 4). Durch die unterschiedliche Steigung der Spritzwand 6 und des hochgezogenen vorderen Randes 10 der Fußablage 4 wird zwischen diesen ein im Querschnitt etwa dreieckiger Hohlraum gebildet, der mit einem Padding 32 oder Polster ausgefüllt ist. Dieses Padding 32 oder Polster wirkt bei einer Intrusion der Spritzwand 6 infolge eines unfallbedingten Aufpralls des Personenkraftwagens als Energieabsorptionselement und dient dazu, die auf die Füße des Fahrers ausgeübten Beschleunigungskräfte zu verringern.

Auf der ebenen Unterseite ihres Bodens 8 ist die Fußablage 4 mit drei überstehenden Rippen 34 versehen, die sich vom unteren Ende des hochgezogenen vorderen Randes 10 aus parallel zu den Seitenrändern 12 nach hinten erstrecken und die Steifigkeit der Fußablage 4 vergrößern. Die Unterkanten 36 der Rippen 34 verlaufen in vorderen Teil der Fußablage 4 parallel zum Boden 8 und erstrecken sich dann schräg nach oben bis zu dessen Unterseite.

Die Rippen 34 greifen in Führungsschienen 38 mit U-förmigem Querschnitt ein, die in die Dämmstoffschicht 26 eingelassen sind. Die Schienen 38 dienen bei einer Verschiebung der Fußablage 4 entgegen der Fahrtrichtung im Zusammenwirken mit den Rippen 34 als Führungen, wobei sie gleichzeitig dafür sorgen, daß die Fußablage 4 während ihrer - Rückwärtsverlagerung etwas um eine quer zur Fahrtrichtung und parallel zur Fahrbahnebene verlaufende Y-Achse gekippt wird, um so den Fußablagewinkel α zu bewahren bzw. vorteilhaft zu verkleinem. Das Kippen der Fußablage 4 um die Y-Achse wird dadurch verursacht, daß sich der Übergang zwischen dem horizontalen und dem schrägen Teil der Unterkanten 36 der Rippen 34 bei einer Rückwärtsbewegung der Fußablage 4 entlang des schrägen Bodens der Schienen 38 nach oben verschiebt, wie am besten in Fig. 6 dargestellt, wodurch sich der Boden 8 der Fußablage 4 schräg nach vorne und unten neigt.

Das gerundete hintere Ende der Fußablage 4 erstreckt sich bis knapp vor den Fahrersitz 24 (Fig. 4), wobei es von dem bis unter den Fahrersitz 24 reichenden Bodenbelag verdeckt wird. Die Breite der Fußablage 4 im Bereich des hinteren Randes 18 ihres Bodens 8 ist so gewählt, daß sich dieser Rand 18 bei einer Verlagerung der Fußablage 4 entgegen der Fahrtrichtung unter den Sitz 24 verschieben kann (Fig. 6), wobei sich der Fußbodenbelag in diesem Bereich nach oben wölbt.

Im normalen Betrieb des Personenkraftwagens wird die Fußablage 4 durch die Haftreibung zwischen ihrer Unterseite und der Oberseite der Dämmstoffschicht 26 sowie durch den Eingriff der Rippen 34 in die Schienen 38 in ihrer Lage festgehalten. Bei einem unfallbedingten Aufprall des Personenkraftwagens und einer dadurch verursachten Intrusion der Spritzwand 6 werden jedoch von der Spritzwand 6 Kräfte auf den vorderen Rand 10 der Fußablage 4 ausgeübt, die zur Fahrtrichtung entgegengesetzt sind und diejenigen Kräfte weit übersteigen, welche die Fußablage 4 in ihrer Lage festhalten. Dadurch wird die Fußablage 4 zusammen mit dem Fußbodenbelag und den darauf ruhenden Füßen des Fahrers entgegen der Fahrtrichtung nach hinten verlagert, um die Füße und Beine des Fahrers aus dem Bereich der aufprallbedingten Verformung der Spritzwand 6 und damit aus dem Bereich der größten Verletzungsgefahr heraus nach hinten zu bewegen.

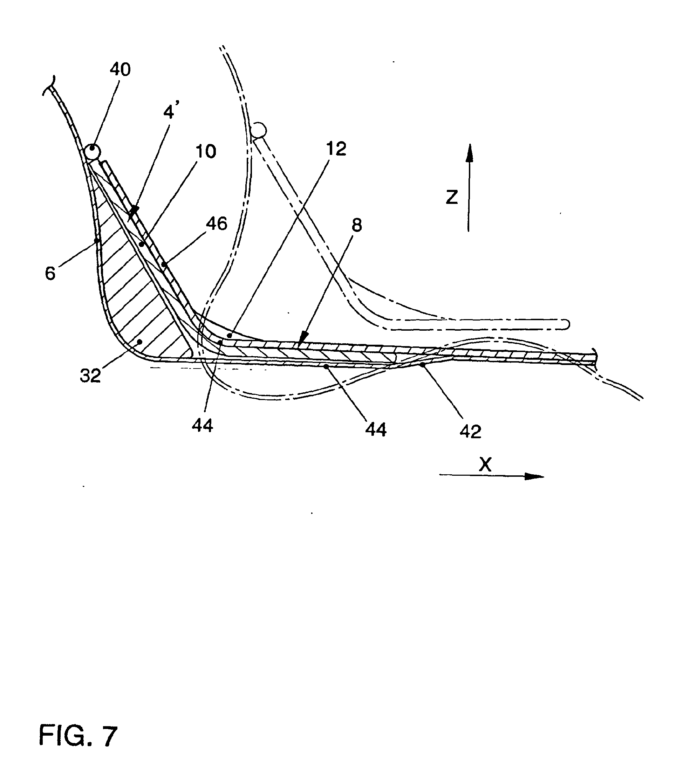

Im Unterschied zu der zuvor beschriebenen Fußablage 4 ist die in Fig. 7 dargestellte Fußablage 4' an der Oberkante ihres hochgezogenen vorderen Randes 10 über ein Kugelgelenk 40 mit drei rotatorischen Freiheitsgraden kardanisch an der Spritzwand 6 aufgehängt, so daß sie sich im Falle einer Intrusion der Spritzwand 6 nicht nur im wesentlichen parallel zur Fahrzeuglängs- oder X-Achse entgegen der Fahrtrichtung nach hinten verschiebt, wie in Fig. 7 in unterbrochenen Linien dargestellt, sondern gleichzeitig auch um ein gewisses Maß um die Y-Achse und eine zur X- und Y-Achse senkrechte Z-Achse gekippt werden kann. Die Kraftübertragung von der Spritzwand 6 auf die Fußablage 4 erfolgt in diesem Fall über das Kugelgelenk 40.

Das gesteuerte Kippen der Fußablage 4 um die Y-Achse erfolgt durch eine hinter dem hinteren Rand 18 der Fußablage 4 angeordnete Schräge 42 im Bodenblech 44 des Fußraums, die bei einer Rückwärtsbewegung der Fußablage 4 deren hinteres Ende etwas anhebt. Das gesteuerte Kippen der Fußablage 4 um die Z-Achse kann beispielsweise durch schräge seitliche Führungen (nicht dargestellt) erfolgen, die eine leichte Drehung der Fußablage um die Z-Achse erzwingen.

Die in Fig. 7 dargestellte Fußablage 4 weist nur im Bereich des Übergangs 44 zwischen ihrem ebenen Boden 8 und ihrem hochgezogenen vorderen Rand 10 nach oben überstehende Seitenränder 12 auf, um die Biegesteifigkeit der Fußablage 4 insbesondere im Bereich dieses Übergangs 44 zu vergrößern, wo die Füße des Fahrers mit den Hacken auf einem die Fußablage 4 verdeckenden Bodenbelag 46 aufliegen.

## Patentansprüche

1. Sicherheitseinrichtung für ein Kraftfahrzeug, mit einer in einem vorderen Fußraum (2) des Kraftfahrzeuges montierten Fußablage (4, 4'), die bei einer Intrusion einer Begrenzungswand (6) in den Fußraum (2) durch eine von der intrudierenden Begrenzungswand (6) auf die Fußablage (4, 4') ausgeübten Kraft nach hinten verlagert wird zur Verlagerung von auf der Fußablage (4, 4') ruhenden unteren Extremitäten eines Insassen des Kraftfahrzeuges aus dem Verformungsbereich der Begrenzungswand (6) des Fußraums (2) heraus nach hinten, **dadurch gekennzeichnet, dass** die Fußablage (4, 4') an der Begrenzungswand (6) befestigt ist.

2. Sicherheitseinrichtung nach Anspruch 1, **dadurch gekennzeichnet, dass** die Fußablage (4, 4') an oder in der Nähe einer Oberkante eines hochgezogenen vorderen Randes (10) mit der Begrenzungswand (6) verbunden ist.

3. Sicherheitseinrichtung nach Anspruch 1 oder 2, **dadurch gekennzeichnet, dass** die Fußablage (4, 4') durch eine von der intrudierenden Begrenzungswand (6) unmittelbar auf einen vorderen Rand (10) der Fußablage (4, 4') ausgeübte Kraft nach hinten verlagert wird.

4. Sicherheitseinrichtung nach einem der Ansprüche 1 bis 3, **dadurch gekennzeichnet, dass** die Fußablage (4, 4') eine größere Biegefestigkeit als die Begrenzungswand (6) aufweist.

5. Sicherheitseinrichtung nach einem der Ansprüche 1 bis 4, **dadurch gekennzeichnet, dass** die Fußablage (4, 4') mindestens stellenweise gegen die Begrenzungswand (6) anliegt.

6. Sicherheitseinrichtung nach einem der Ansprüche 1 bis 5, **dadurch gekennzeichnet, dass** zwischen der Begrenzungswand (6) und der Fußablage (4, 4') ein Padding (32) oder Polster angeordnet ist.

7. Sicherheitseinrichtung nach einem der Ansprüche 1 bis 6, **dadurch gekennzeichnet, dass** die Fußablage (4, 4') mit Führungen (38) zusammenwirkt.

8. Sicherheitseinrichtung nach einem der Ansprüche 1 bis 7, **dadurch gekennzeichnet, dass** die Fußablage (4, 4') an der Begrenzungswand (6) beweglich befestigt ist.

9. Sicherheitseinrichtung nach Anspruch 8, **dadurch gekennzeichnet, dass** die Fußablage (4, 4') um mindestens eine Achse verschwenkbar an der Begrenzungswand (6) befestigt ist.

10. Sicherheitseinrichtung nach Anspruch 9, **dadurch gekennzeichnet, dass** die Fußablage (4, 4') mit drei rotatorischen Freiheitsgraden verschwenkbar an der Begrenzungswand (6) befestigt ist.

11. Sicherheitseinrichtung nach Anspruch 10, **dadurch gekennzeichnet, dass** die Fußablage (4, 4') über ein Kugelgelenk (40) kardanisch an der Begrenzungswand (6) aufgehängt ist.

12. Sicherheitseinrichtung nach einem der Ansprüche 1 bis 11, **dadurch gekennzeichnet, dass** die Begrenzungswand (6) von einer in Fahrtrichtung vor dem Fußraum (2) angeordneten Spritzwand und/oder Radhauswand gebildet wird.

13. Sicherheitseinrichtung nach einem der Ansprüche 1 bis 12, **dadurch gekennzeichnet, dass** die Fußablage (4, 4') bei ihrer Verlagerung nach hinten um mindestens eine im wesentlichen quer zur Fahrtrichtung verlaufende Achse gekippt wird, so dass sich eine zuvor im wesentlichen parallel zu einer Fahrbahnebene ausgerichtete Bodenoberfläche der Fußablage unter einem kleinen Winkel schräg nach vorne unten neigt.

14. Sicherheitseinrichtung nach einem der Ansprüche 1 bis 13, **dadurch gekennzeichnet, dass** die Fußablage (4, 4') auf einem Boden des Fußraums (2) aufliegt und auf ihrer Oberseite einen Bodenbelag (46) trägt.

15. Sicherheitseinrichtung nach Anspruch 14, **dadurch gekennzeichnet, dass** die Fußablage (4, 4') lose auf einer oberen Dämmstoffschicht des Bodens aufliegt.

16. Sicherheitseinrichtung nach einem der Ansprüche 1 bis 15, **dadurch gekennzeichnet, dass** die Fußablage (4, 4') an die Form des Bodens angepasst ist.

17. Sicherheitseinrichtung nach einem der Ansprüche 1 bis 16, **dadurch gekennzeichnet, dass** die Fußablage (4, 4') Längsversteifungen (12, 34) aufweist.

18. Sicherheitseinrichtung nach einem der Ansprüche 1 bis 17, **dadurch gekennzeichnet, dass** die Fußablage (4, 4') einen hochgezogenen vorderen Rand (10) aufweist.

19. Sicherheitseinrichtung nach Anspruch 18, **dadurch gekennzeichnet, dass** der Rand (10) eine Aussparung (22) für ein Fußpedal (20) des Kraftfahrzeugs aufweist.

20. Sicherheitseinrichtung nach einem der Ansprüche 1 bis 19, **dadurch gekennzeichnet, dass** sich die Fußablage (4, 4') nach hinten zu bis vor einen benachbarten Sitz des Kraftfahrzeugs erstreckt und sich bei ihrer Verlagerung nach hinten unter den Sitz verschiebt.

21. Sicherheitseinrichtung nach einem der Ansprüche 1 bis 20, **dadurch gekennzeichnet, dass** die Fußablage (4, 4') ein flaches hinteres Ende mit einem gerundeten Begrenzungsrand (18) aufweist.

22. Kraftfahrzeug mit einer Sicherheitseinrichtung nach einem der vorangehenden Ansprüche.

## Claims

1. Safety device for a motor vehicle, with a footrest (4, 4') which is fitted in a front foot well (2) of the motor vehicle and, upon an intrusion of a boundary wall (6) into the foot well (2), is displaced to the rear by means of a force exerted on the footrest (4, 4') by the intruding boundary wall (6), in order to displace lower extremities, which rest on the footrest (4, 4'), of an occupant of the motor vehicle to the rear out of the region of deformation of the boundary wall (6) of the foot well (2), **characterized in that** the footrest (4, 4') is fastened to the boundary wall (6).

2. Safety device according to Claim 1, **characterized in that** the footrest (4, 4') is connected to the boundary wall (6) on or in the vicinity of a top edge of a raised, front edge (10).

3. Safety device according to Claim 1 or 2, **characterized in that** the footrest (4, 4') is displaced to the rear by means of a force exerted directly on a front edge (10) of the footrest (4, 4') by the intruding boundary wall (6).

4. Safety device according to one of Claims 1 to 3, **characterized in that** the footrest (4, 4') has a greater flexural strength than the boundary wall (6).

5. Safety device according to one of Claims 1 to 4, **characterized in that** the footrest (4, 4') bears at least at some points against the boundary wall (6).

6. Safety device according to one of Claims 1 to 5, **characterized in that** a padding (32) or cushion is arranged between the boundary wall (6) and the footrest (4, 4').

7. Safety device according to one of Claims 1 to 6, **characterized in that** the footrest (4, 4') interacts with guides (38).

8. Safety device according to one of Claims 1 to 7, **characterized in that** the footrest (4, 4') is fastened moveably to the boundary wall (6).

9. Safety device according to Claim 8, **characterized in that** the footrest (4, 4') is fastened to the boundary wall (6) in a manner such that it can pivot about at least one axis.

10. Safety device according to Claim 9, **characterized in that** the footrest (4, 4') is fastened to the boundary wall (6) in a manner such that it can pivot with three rotational degrees of freedom.

11. Safety device according to Claim 10, **characterized in that** the footrest (4, 4') is suspended cardanically on the boundary wall (6) via a ball-and-socket joint (40).

12. Safety device according to one of Claims 1 to 11, **characterized in that** the boundary wall (6) is formed by a splashboard and/or wheelhouse wall arranged in front of the foot well (2) in the direction of travel.

13. Safety device according to one of Claims 1 to 12, **characterized in that** the footrest (4, 4'), upon its displacement to the rear, is tilted about at least one axis running essentially transversely to the direction of travel, so that a floor surface of the footrest, which floor surface was previously aligned essentially parallel to a plane of the carriageway, is inclined obliquely forwards and downwards at a small angle.

14. Safety device according to one of Claims 1 to 13, **characterized in that** the footrest (4, 4') rests on a floor of the foot well (2) and bears a floor covering (46) on its upper side.

15. Safety device according to Claim 14, **characterized in that** the footrest (4, 4') rests loosely on an upper insulating material layer of the floor.

16. Safety device according to one of Claims 1 to 15, **characterized in that** the footrest (4, 4') is matched to the shape of the floor.

17. Safety device according to one of Claims 1 to 16, **characterized in that** the footrest (4, 4') has longitudinal reinforcements (12, 34).

18. Safety device according to one of Claims 1 to 17, **characterized in that** the footrest (4, 4') has a raised front edge (10).

19. Safety device according to Claim 18, **characterized in that** the edge (10) has a cutout (22) for a foot pedal (20) of the motor vehicle.

20. Safety device according to one of Claims 1 to 19, **characterized in that** the footrest (4, 4') extends rearwards as far as to in front of an adjacent seat of the motor vehicle and, when it is displaced to the rear, is pushed under the seat.

21. Safety device according to one of Claims 1 to 20, **characterized in that** the footrest (4, 4') has a flat rear end with a rounded boundary edge (18).

22. Motor vehicle with a safety device according to one of the preceding claims.

## Revendications

1. Dispositif de sécurité pour véhicule automobile, comprenant un repose-pieds (4, 4') monté dans un espace avant pour les pieds (2) du véhicule automobile, lequel, au cours d'une intrusion d'une paroi de limitation (6) dans l'espace pour les pieds (2) est déplacé vers l'arrière par une force exercée sur le repose-pieds (4, 4') par l'intrusion de la paroi de limitation (6), en vue de déplacer les extrémités inférieures d'un occupant du véhicule automobile reposant sur le repose-pieds (4, 4') hors de la zone de déformation de la paroi de limitation (6) de l'espace pour les pieds (2) vers l'arrière, **caractérisé en ce que** le repose-pieds (4, 4') est fixé à la paroi de limitation (6).

2. Dispositif de sécurité selon la revendication 1, **caractérisé en ce que** le repose-pieds (4, 4') est connecté à la paroi de limitation (6) au niveau d'une arête supérieure ou à proximité d'une arête supérieure d'un bord avant relevé (10).

3. Dispositif de sécurité selon la revendication 1 ou 2, **caractérisé en ce que** le repose-pieds (4, 4') est déplacé vers l'arrière par une force exercée par l'intrusion de la paroi de limitation (6) directement sur un bord avant (10) du repose-pieds (4, 4').

4. Dispositif de sécurité selon l'une quelconque des revendications 1 à 3, **caractérisé en ce que** le repose-pieds (4, 4') présente une rigidité en flexion supérieure à celle de la paroi de limitation (6).

5. Dispositif de sécurité selon l'une quelconque des revendications 1 à 4, **caractérisé en ce que** le repose-pieds (4, 4') s'applique au moins en partie contre la paroi de limitation (6).

6. Dispositif de sécurité selon l'une quelconque des revendications 1 à 5, **caractérisé en ce que** l'on dispose entre la paroi de limitation (6) et le repose-pieds (4, 4') un rembourrage (32) ou un coussin.

7. Dispositif de sécurité selon l'une quelconque des revendications 1 à 6, **caractérisé en ce que** le repose-pieds (4, 4') coopère avec des glissières (38).

8. Dispositif de sécurité selon l'une quelconque des revendications 1 à 7, **caractérisé en ce que** le repose-pieds (4, 4') est fixé de manière mobile à la paroi de limitation (6).

9. Dispositif de sécurité selon la revendication 8, **caractérisé en ce que** le repose-pieds (4, 4') est fixé à la paroi de limitation (6) de manière à pouvoir pivoter autour d'au moins un axe.

10. Dispositif de sécurité selon la revendication 9, **caractérisé en ce que** le repose-pieds (4, 4') est fixé à la paroi de limitation (6) avec trois degrés de liberté en rotation.

11. Dispositif de sécurité selon la revendication 10, **caractérisé en ce que** le repose-pieds (4, 4') est accroché par le biais d'une rotule (40) à la cardan à la paroi de limitation (6).

12. Dispositif de sécurité selon l'une quelconque des revendications 1 à 11, **caractérisé en ce que** la paroi de limitation (6) est formée par une paroi de tablier et/ou une paroi de passage de roue disposée devant l'espace pour les pieds (2) dans la direction de conduite.

13. Dispositif de sécurité selon l'une quelconque des revendications 1 à 12, **caractérisé en ce que** le repose-pieds (4, 4'), lors de son déplacement vers l'arrière est basculé autour d'au moins un axe s'étendant essentiellement transversalement à la direction de conduite, de sorte qu'une surface de fond du repose-pieds orientée préalablement essentiellement parallèlement à un plan de la route soit inclinée d'un petit angle obliquement vers l'avant et vers le bas.

14. Dispositif de sécurité selon l'une quelconque des revendications 1 à 13, **caractérisé en ce que** le repose-pieds (4, 4') s'appuie sur un sol de l'espace pour les pieds (2) et porte sur son côté supérieur un revêtement de sol (46).

15. Dispositif de sécurité selon la revendication 14, **caractérisé en ce que** le repose-pieds (4, 4') repose librement sur une couche amortissante supérieure du sol.

16. Dispositif de sécurité selon l'une quelconque des revendications 1 à 15, **caractérisé en ce que** le repose-pieds (4, 4') est adapté à la forme du sol.

17. Dispositif de sécurité selon l'une quelconque des revendications 1 à 16, **caractérisé en ce que** le repose-pieds (4, 4') présente des renforcements longitudinaux (12, 34).

18. Dispositif de sécurité selon l'une quelconque des revendications 1 à 17, **caractérisé en ce que** le repose-pieds (4, 4') présente un bord avant relevé (10).

19. Dispositif de sécurité selon la revendication 18, **caractérisé en ce que** le bord (10) présente un évidement (22) pour une pédale de pied (20) du véhicule automobile.

20. Dispositif de sécurité selon l'une quelconque des revendications 1 à 19, **caractérisé en ce que** le repose-pieds (4, 4') s'étend vers l'arrière jusqu'avant un siège voisin du véhicule automobile, et se glisse sous le siège au cours de son déplacement vers l'arrière.

21. Dispositif de sécurité selon l'une quelconque des revendications 1 à 20, **caractérisé en ce que** le repose-pieds (4, 4') présente une extrémité arrière plate avec un bord de limitation arrondi (18).

22. Véhicule automobile comprenant un dispositif de sécurité selon l'une quelconque des revendications précédentes.
